Europäisches Patentamt

European Patent Office

Office européen des brevets

(11) Numéro de publication : **0 169 134**
**B1**

(12) **FASCICULE DE BREVET EUROPÉEN**

(45) Date de publication du fascicule du brevet :
13.04.88

(21) Numéro de dépôt : **85401347.1**

(22) Date de dépôt : **03.07.85**

(51) Int. Cl.⁴ : **F 16 K 47/08**

(54) Distributeur hydraulique proportionnel.

(30) Priorité : **20.07.84 FR 8411508**

(43) Date de publication de la demande :
**22.01.86 Bulletin 86/04**

(45) Mention de la délivrance du brevet :
**13.04.88 Bulletin 88/15**

(84) Etats contractants désignés :
**CH DE FR GB IT LI**

(56) Documents cités :
**FR-A- 2 257 830**
**FR-A- 2 381 219**
**GB-A- 2 057 637**

(73) Titulaire : **CENTRE TECHNIQUE DES INDUSTRIES MECANIQUES**
**52, avenue Félix-Louat B.P. 67**
**F-60304 Senlis Cédex (FR)**

(72) Inventeur : **Wartelle, Claude**
**9 rue des Hameaux**
**F-60270 Gouvieux (FR)**

(74) Mandataire : **Loriot, Jacques et al**
**c/o SA. FEDIT-LORIOT 38, avenue Hoche**
**F-75008 Paris (FR)**

**0 169 134**

## Description

La présente invention concerne un distributeur hydraulique proportionnel et elle vise plus particulièrement un distributeur du type servo-valve à commande numérique.

Les distributeurs hydrauliques, notamment ceux assurant des commutations « tout ou rien », sont bien connus et sont largement utilisés, par exemple pour la commande des vérins à simple ou double effet.

Dans le type le plus répandu, le distributeur comprend un corps fixe percé de plusieurs passages de fluide hydraulique (par exemple : Haute pression, Basse pression, Utilisation) et un organe distributeur mobile (par exemple un tiroir cylindrique coulissant dans le corps), cet organe mobile comportant sur sa surface des zones d'obturation des passages de fluide et comportant des évidements formant des zones de dégagement de ces passages. Suivant sa position, le tiroir assure la mise en communication ou l'isolement des uns ou des autres passages. Le plus souvent, les déplacements du tiroir, vers l'une ou l'autre de ses positions extrêmes, sont commandés par un actionneur (mécanique, électrique ou hydraulique). Mais dans le cas des gros distributeurs de puissance, on doit prévoir un petit électro-distributeur formant un étage pilote pour l'étage de puissance.

Dans de nombreuses applications, on a besoin de distributeurs proportionnels, c'est-à-dire assurant une variation progressive du débit ou de la pression entre les deux positions extrêmes du tiroir, par opposition aux distributeurs « tout ou rien ».

Malgré une grande précision d'usinage des arêtes du tiroir coulissant, il est très difficile d'obtenir, dans un distributeur proportionnel, une bonne linéarité entre le signal de commande de l'actionneur (par exemple le courant excitant un électro-aimant de commande du tiroir) et la grandeur hydraulique de sortie. De plus l'électro-aimant est de dimensions importantes et coûteux.

Pour obtenir de meilleures performances (en gain et en linéarité), on a réalisé depuis quelques années des distributeurs proportionnels, ou servo-valves, possédant un étage pilote électro-hydraulique. Dans ces distributeurs l'étage de puissance est toujours constitué par un tiroir cylindrique coulissant et l'étage pilote est le plus souvent constitué par un pont de Wheatstone hydraulique comportant des buses dont les fuites sont réglées par une palette mobile commandée par un actionneur électrique (moteur ou électro-aimant).

Mais ces appareils sont très coûteux, si bien qu'ils sont réservés jusqu'à maintenant à des industries particulières, telles que l'aéronautique. Au surplus, les systèmes buse/palette sont très sensibles à la pollution du fluide.

Avec le développement de l'automatisation des machines, et pour tirer parti des avantages apportés par la microélectronique aux commandes numériques, il existe un besoin pour des servo-valves proportionnelles de type industriel, ayant de bonnes performances et peu coûteuses.

Pour remédier à la difficulté de la variation progressive continue de la section de passage d'un orifice unique de forte section, au moyen d'un obturateur dégageant plus ou moins cet orifice, il a été proposé de constituer le passage par une pluralité d'orifices de faible section qui sont découverts (ou obturés) successivement par l'obturateur.

Un exemple d'un tel dispositif, pour l'étranglement d'un fluide dans un conduit, est donné dans le document FR-A-2.257.830. Dans le cas où l'organe obturateur mobile d'un tel dispositif serait entraîné par un actionneur pas à pas, on réaliserait un distributeur hydraulique proportionnel dans lequel la variation de la section de passage, au lieu d'être continue, se ferait par incréments à chaque avance (ou recul) de l'organe obturateur mobile.

La présente invention concerne un dispositif hydraulique du type ci-dessus, qui est défini par le préambule de la revendication 1.

Mais un tel dispositif présente l'inconvénient que, pour obtenir une résolution fine (par exemple 2 %), il faudrait prévoir un très grand nombre d'orifices fins ou gicleurs (par exemple 50), ce qui serait difficile à réaliser sur un distributeur de petites dimensions et rendrait la construction coûteuse.

La présente invention a pour but de résoudre ce problème et elle permet par exemple de réaliser un distributeur à 42 positions ne nécessitant le perçage que de 18 orifices fins ou gicleurs.

Le distributeur hydraulique proportionnel suivant l'invention est caractérisé en ce que :

— les gicleurs sont disposés sur une pluralité de pistes parallèles orientées parallèlement au déplacement relatif des deux organes ;

— une pluralité m de gicleurs de section identique est percée sur chacune desdites pistes à intervalle d ;

— la section des gicleurs est croissante dans le rapport a, 2a, 4a, 8a … d'une piste à l'autre ;

— et l'extension des évidements ainsi que l'extension des zones d'obturation sur les pistes correspondantes du deuxième organe sont égales à $m \times d$, $2m \times d$, $4m \times d$, $8m \times d$ … .

Dans un distributeur suivant l'invention, le déplacement de l'organe mobile par rapport au corps fixe peut être un mouvement linéaire ou, de préférence, un mouvement de rotation.

Avantageusement, l'organe mobile est constitué par un cylindre, formant un tiroir rotatif dans lequel sont usinés les évidements précités, tournant dans un alésage cylindrique du corps dans lequel sont

2

# 0 169 134

percés les gicleurs. Un moteur pas-à-pas, ou système analogue entraîne directement le tiroir rotatif, par incréments.

L'invention sera mieux comprise à la lecture de la description détaillée qui va suivre et à l'examen des dessins annexés qui représentent, à titre d'exemples non limitatifs, plusieurs modes de réalisation de l'invention.

La figure 1 est une vue en coupe d'un distributeur suivant le préambule de la revendication 1.

La figure 2 est une vue partielle du distributeur suivant le plan II-II de la figure 1.

La figure 3 est une vue partielle en plan, suivant le plan de contact entre les organes fixe et mobile, d'un autre mode de réalisation d'un tel distributeur.

Les figures 4A, 4B, 4C, 4D sont des vues en coupe par des plans passant par les différentes pistes du distributeur de la figure 3.

La figure 5 est une vue, analogue à la figure 3, d'un distributeur suivant la présente invention.

La figure 6 est une vue en coupe par un plan radial d'un distributeur à tiroir cylindrique coulissant.

Les figures 7 et 8 sont des vues en coupe diamétrale et en plan d'un distributeur à tiroir rotatif plan.

Les figures 9 et 10 sont des vues en coupe diamétrale et en plan d'un distributeur 3/2 à tiroir rotatif plan.

La figure 11 est une vue en coupe diamétrale d'un distributeur 5/2 avec deux tiroirs rotatifs plans accouplés mécaniquement.

La figure 12 est une vue en coupe d'un distributeur à tiroir cylindrique rotatif.

La figure 13 est une vue en coupe d'un distributeur 5/2 à tiroir cylindrique rotatif.

La figure 14 est une vue partielle développée de la chemise à gicleurs et du tiroir cylindrique rotatif du distributeur de la figure 13.

La figure 15 est une vue en coupe suivant quatre plans ABCD du tiroir de la figure 13.

La figure 16 est une vue partielle en coupe de la chemise à gicleurs et du tiroir de la figure 13.

La figure 17 est une vue en coupe montrant la répartition angulaire des gicleurs dans la chemise à gicleurs.

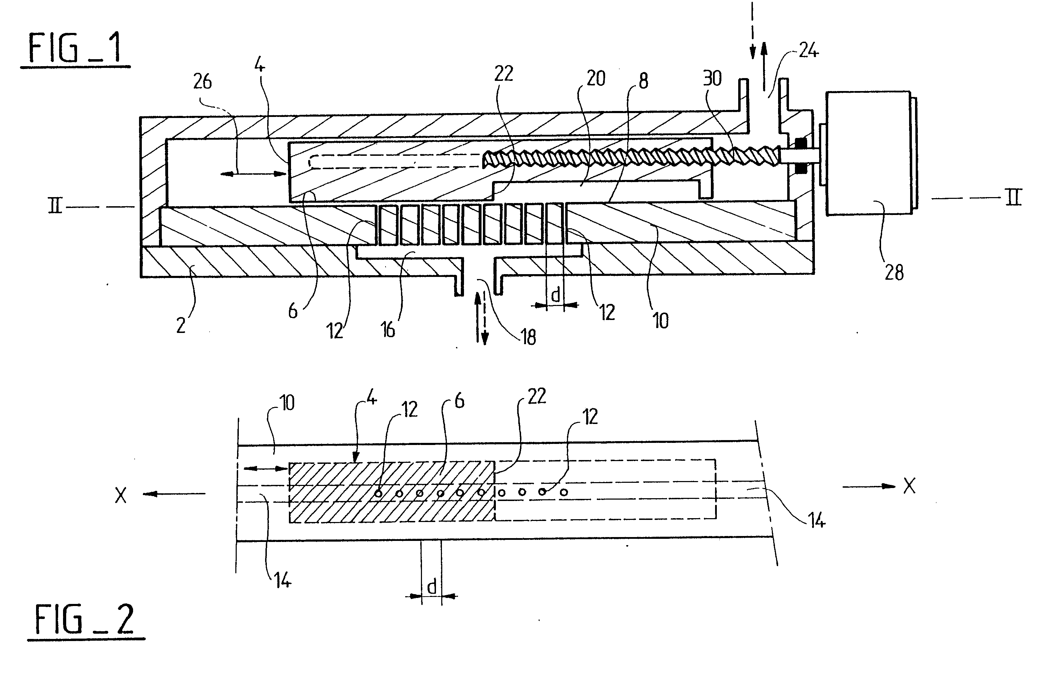

Le distributeur de la figure 1 comprend un corps fixe 2 et un organe mobile ou tiroir coulissant 4 qui présente une surface plane 6 en contact avec une surface plane 8 d'une plaque 10, dite « plaque à gicleurs », faisant partie du corps fixe 2. La plaque 10 est percée d'une pluralité (10 dans l'exemple de la figure 1) d'orifices calibrés ou gicleurs 12, de section a, espacés également les uns des autres d'un intervalle d et alignés suivant une ligne ou piste 14 (voir figure 2). Les gicleurs 12 communiquent, par une gorge 16 ménagée dans le corps 2 avec un passage d'entrée (ou de sortie) 18 du fluide dans le distributeur.

Le tiroir coulissant 4 joue le rôle d'une glace vis-à-vis des gicleurs 12.

La surface 6 du tiroir constitue une zone d'obturation des gicleurs, tandis qu'un évidement 20, qui se raccorde à la surface 6 par une arête 22, forme une zone de dégagement des gicleurs permettant l'écoulement du fluide, qui a traversé les gicleurs dégagés, vers un passage de sortie (ou d'entrée) 24 du fluide hors du distributeur.

Le tiroir 4 est commandé pour se déplacer linéairement dans un sens et dans l'autre, suivant la flèche 26, par un actionneur pas-à-pas qui peut comprendre par exemple un moteur électrique 28 entraînant une vis sans fin 30 qui taraude dans le tiroir 4.

A chaque signal reçu, l'actionneur 28, 30 déplace le tiroir 4 d'un incrément d correspondant à l'écartement d des gicleurs.

En fonctionnement, à chaque déplacement d'un incrément d du tiroir 4, l'arête 22 du tiroir découvre tour à tour un nouveau gicleur 12, si bien que la section de passage du fluide augmente, de façon discontinue, suivant la progression 0, a, 2a, 3a, ... 10a (ou diminue lorsque le tiroir 4 se déplace dans le sens opposé), mais d'une façon parfaitement linéaire vis-à-vis des signaux d'entrée appliqués au moteur 28 de l'actionneur.

Le mode de réalisation simple représenté sur les figures 1 et 2 ne nécessite l'usinage, sur le tiroir 4, que d'une seule arête 22 de dégagement ou d'obturation des gicleurs mais il obligerait, si on voulait avoir une résolution plus fine (par exemple 1 ou 2 %), à percer un grand nombre de gicleurs (par exemple 100 ou 50). D'autre part, pour constituer un distributeur dit 5/2 (à cinq orifices et deux positions extrêmes), tel que ceux nécessaires pour commander un vérin à double effet, on devrait associer quatre systèmes indentiques à celui de la figure 1.

C'est pourquoi on va décrire dans ce qui suit des distributeurs proportionnels permettant une résolution plus fine, sans nécessiter le perçage d'un grand nombre de gicleurs, et permettant la réalisation de distributeurs 3/2 ou 5/2.

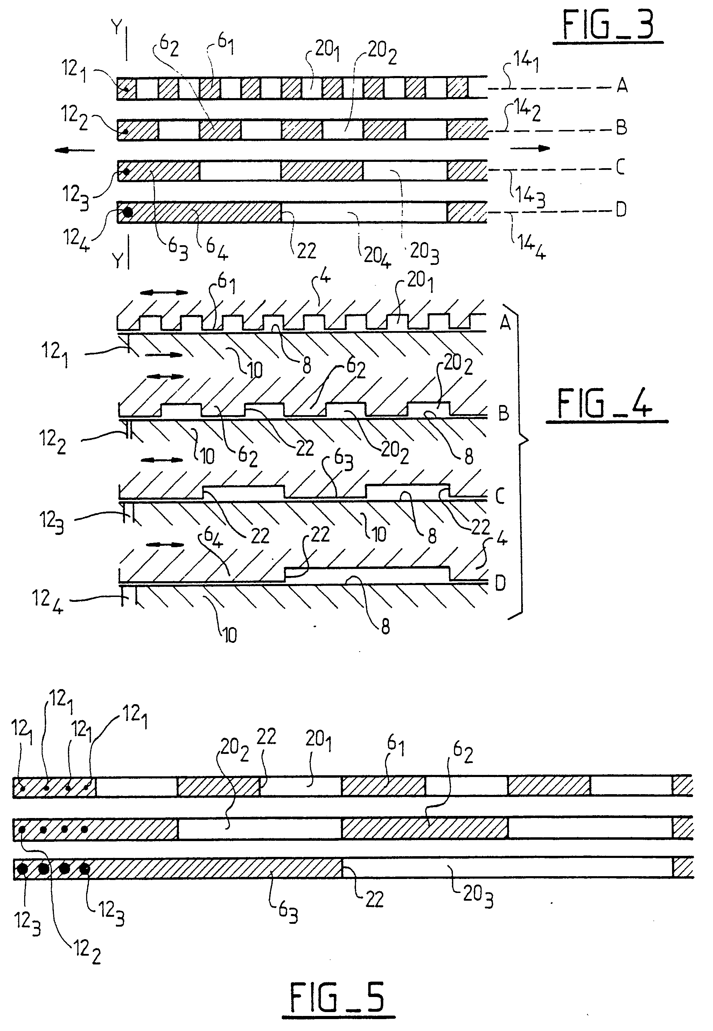

La figure 3 est une vue analogue à la figure 2, d'un distributeur dont le tiroir 4 coulisse sur la surface plane 8 d'une plaque à gicleurs 10.

Sur cette plaque est percée une pluralité n d'orifices $12_1$, $12_2$, $12_3$, $12_4$ espacés les uns des autres et, de préférence, alignés sur un axe Y-Y perpendiculaire à l'axe de déplacement X-X du tiroir, chaque orifice étant percé sur l'une de n pistes parallèles $14_1$, $14_2$, $14_3$, $14_4$ analogues à la piste 14 de figure 2.

Les quatre orifices ont des sections croissantes : a, 2a, 4a, 8a.

La figure 4 est une vue partielle en coupe, analogue à la figure 1, mais montrant seulement la plaque à gicleurs 10 et le tiroir coulissant 4, les quatre vues A, B, C, D de la figure 4 étant faites suivant des plans

3

parallèles passant respectivement par les pistes $14_1$, $14_2$, $14_3$, $14_4$ contenant les gicleurs $12_1$, $12_2$, $12_3$, $12_4$.

Suivant la piste $14_1$ (figure 4A), le tiroir coulissant 4 comporte des zones d'obturation $6_1$, en contact avec la surface plane 8 de la plaque à gicleurs, qui s'étendent sur une longueur d (égale à l'incrément de déplacement du tiroir) et qui sont séparées par des évidements 20, de même longueur. Ces évidements et ces zones d'obturation (qui sont également représentés sur la figure 3) coopèrent avec le premier orifice $12_1$.

Suivant la piste $14_2$ (figure 4B), les évidements $20_2$ et les zones d'obturation $6_2$ du tiroir, qui coopèrent avec le deuxième orifice $12_2$, ont une longueur des 2d.

De façon analogue, suivant les pistes $14_3$ et $14_4$ (figures 4C, 4D) les évidements $20_3$, $20_4$ et les zones d'obturation $6_3$, $6_4$ ont une longueur de 4d et 8d.

Le tableau ci-dessous indique les gicleurs ouverts (O) ou fermés (F) à chaque déplacement d'un incrément d du tiroir.

| | | | | | | | | | | | | | | |
|---|---|---|---|---|---|---|---|---|---|---|---|---|---|---|
| $12_1$ | (a) | F | O | F | O | F | O | F | O | F | O | F– | ---- | O |
| $12_2$ | (2a) | F | F | O | O | F | F | O | O | F | F | O– | ---- | O |
| $12_3$ | (4a) | F | F | F | F | O | O | O | O | F | F | F– | ---- | O |
| $12_4$ | (8a) | F | F | F | F | F | F | F | F | O | O | O– | ---- | O |
| Section totale | | 0 | a | 2a | 3a | 4a | 5a | 6a | 7a | 8a | 9a | 10a | | 15a |

et montre la progression a, 2a, 3a, etc., de la section totale de passage du fluide.

Ce mode de réalisation permet donc une résolution plus fine, avec un nombre de gicleurs (par exemple 16 incréments avec 4 gicleurs seulement, comme représenté sur les figures 3 et 4 ; ou 64 incréments avec 6 gicleurs seulement) beaucoup plus réduit que dans le cas de la figure 1.

Mais, dans ce mode de réalisation, on doit usiner dans le tiroir un grand nombre d'arêtes 22 de séparation entre les zones d'obturation et les évidements du tiroir (par exemple 30 arrêtes pour 16 incréments dans le cas représenté), ce qui est peu économique.

On a représenté, sur le figure 5, une vue en plan (analogue aux figures 2 et 3) d'un troisième mode de réalisation qui est une combinaison des deux modes de réalisation précédents.

Ce mode de réalisation comporte également n pistes parallèles $14_1$, $14_2$, $14_3$, etc. (comme pour les figures 3 et 4), avec des orifices de sections croissantes a, 2a, 4a, etc. d'une piste à l'autre, mais chaque piste comporte une pluralité m (par exemple quatre) d'orifices de section identique, alignés sur la piste correspondante et espacés d'un pas d (comme pour les figures 1 et 2), selon le sens du déplacement du tiroir.

Le tiroir comporte également, en regard de chaque piste, des zones d'obturation $6_1$, $6_2$, $6_3$ et des évidements $20_1$, $20_2$, $20_3$ ayant respectivement les longueurs : 4d, 8d, 16d et séparés par des arêtes 22.

Lorsque le tiroir 4 se déplace par incrément de valeur d, on obtient sur la première piste des aires de passage successives de fluide qui suivent la séquence : 0, a, 2a, 3a, 4a, 3a, 2a, a, 0, ... ; sur la deuxième piste : 0, 0, 0, 0, 2a, 4a, 6a, 8a, ...

La somme totale des aires découvertes sur les trois pistes suit une séquence correspondant à une progression arithmétique de raison a, comme dans le cas des figures précédentes.

Dans le cas représenté sur la figure 5 où on a n = trois pistes et m = quatre gicleurs par piste, on obtient une progression en : $m \times (2^n - 1) = 28$ incréments. Ceci nécessite l'usinage de $n \times m = 12$ gicleurs et $2 (2^n - 1) = 14$ arêtes telles que les arêtes 22 séparant les évidements des zones d'obturation, ce qui simplifie l'usinage du tiroir, par rapport aux modes de réalisation précédents.

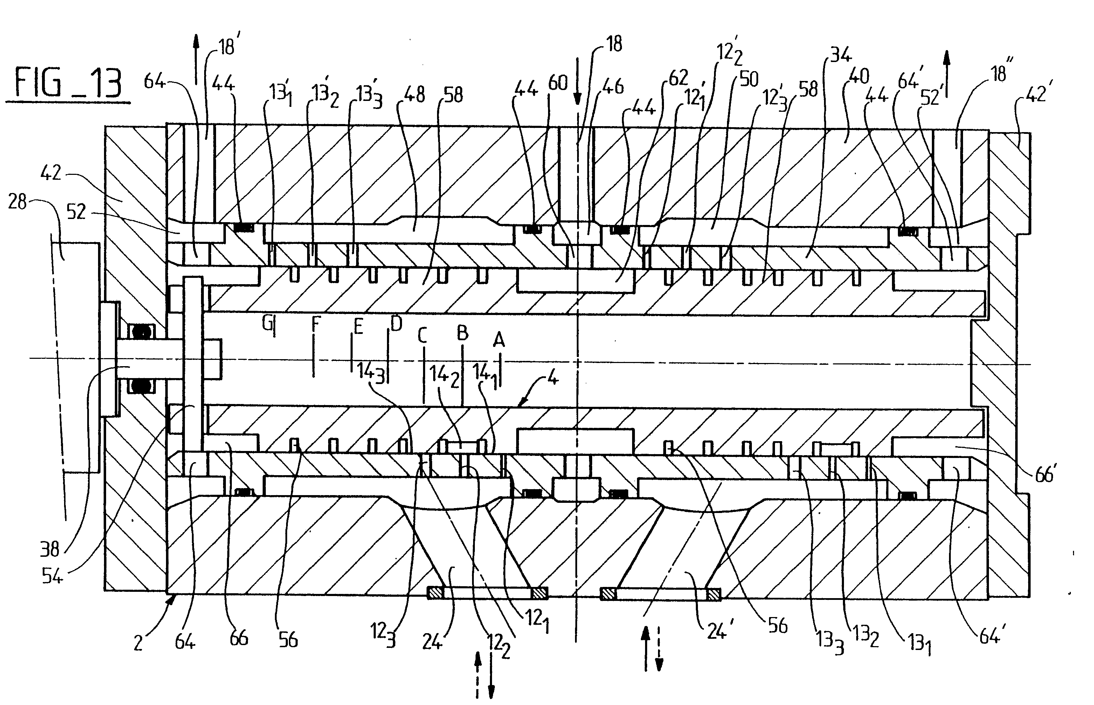

Avec n = 3 pistes et m = 6 gicleurs par piste, soit 18 gicleurs à percer, on obtient 42 positions, avec encore seulement 14 arêtes à usiner dans le tiroir (comme on le verra à propos de la figure 13).

Pour rendre la description plus claire, on a seulement décrit et représenté des distributeurs dans lesquels les déplacements du tiroir sont linéaires et dans lesquels les surfaces coopérantes 6 et 8 du tiroir 4 et de la plaque à glicleurs 10 sont des surfaces planes. Mais dans ces solutions simples, le tiroir n'est pas équilibré hydrostatiquement et il faut donc lui appliquer un effort de plaquage ou de retenue complémentaire pour assurer l'étanchéité entre les deux organes, ce qui nécessite un actionneur relativement puissant.

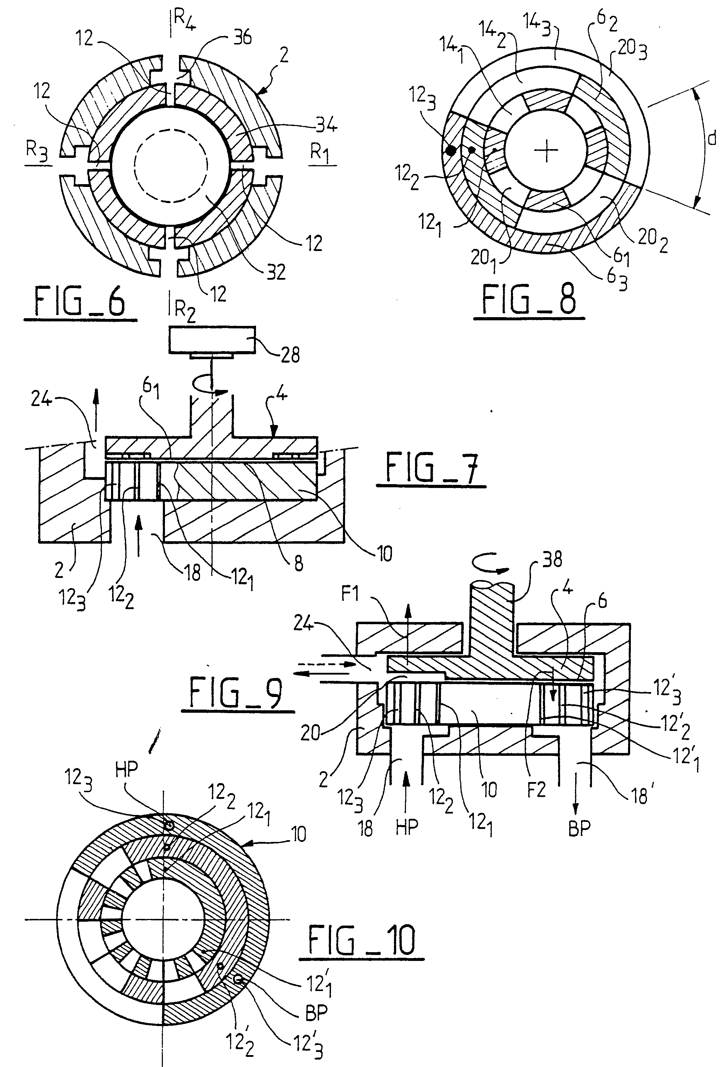

Suivant une variante (figure 6) on peut utiliser un tiroir coulissant 32, mais de forme cylindrique, et non plus plan, qui coulisse dans une chemise tubulaire 34 logée à l'intérieur du corps 2 du distributeur.

4

0 169 134

Les gicleurs 12 sont percés dans la chemise 34 ou 3, ou de préférence 4, rayons $R_1$, $R_2$, $R_3$, $R_4$ et communiquent avec des gorges 36 creusées dans le corps 2 et reliées entre elles pour le passage du fluide. Grâce au décalage angulaire des différents gicleurs on réalise un équilibrage au moins partiel des efforts hydrostatiques.

Cependant, la commande du déplacement linéaire pas-à-pas d'un tiroir mobile nécessite l'intermédiaire d'un mécanisme de transformation de mouvement (par exemple le système vis et écrou 30 de la figure 1) entre un moteur pas-à-pas rotatif et le tiroir.

C'est pourquoi, dans les formes préférées de réalisation de l'invention on choisit un organe distributeur mobile rotatif (plan ou cylindrique) commandé directement en rotation par un moteur rotatif pas-à-pas. Les figures précédentes 2, 3, 4, 5 peuvent être considérées comme des vues développées des surfaces coopérantes en regard 6 et 8, lorsque ces surfaces se déplacent l'une par rapport à l'autre en rotation.

On a représenté sur les figures 7 et 8 un distributeur plan à mouvement rotatif dans lequel des gicleurs $12_1$, $12_2$, $12_3$, de section a, 2a, 4a sont percés dans une plaque à gicleurs 10 circulaire solidaire du corps 2 du distributeur. L'organe distributeur mobile est constitué par un plateau rotatif 4 qui est entraîné directement par un actionneur rotatif pas-à-pas 28 et dont la face active est en contact avec la face plane 8 de la plaque à gicleurs 10. Cette face active présente des évidements $20_1$, $20_2$, $20_3$ et des zones d'obturation $6_1$, $6_2$, $6_3$, disposés sur des secteurs circulaires correspondant à des pistes circulaires $14_1$, $14_2$, $14_3$. Le mode de réalisation des figures 7 et 8 correspond donc exactement aux schémas des figures 3 et 4 (limité à trois pistes, au lieu de quatre), mais avec des pistes $14_1$, $14_2$, $14_3$ circulaires et non pas rectilignes.

Le fonctionnement résulte suffisamment de ce qui précède pour qu'il suffise de dire que, à chaque avance d'un incrément angulaire d du plateau rotatif 4, la section de passage du fluide varie suivant la progression a, 2a, 3a, 4a, etc.

On a décrit et représenté dans ce qui précède des distributeurs proportionnels à une voie permettant de régler une section de passage de fluide entre un seul orifice d'entrée 18 et une seul orifice de sortie 24 (figures 1 et 7).

Pour réaliser un distributeur à trois voies dit « 3/2 » ayant trois orifices (Haute pression, Basse pression, Utilisation), par exemple pour la commande d'un vérin à simple effet, il faudrait accoupler mécaniquement deux distributeurs identiques à ceux qui viennent d'être décrits.

Suivant une forme de réalisation avantageuse, on peut réaliser un tel distributeur 3/2, analogue à celui des figures 7 et 8, mais avec une seule plaque à gicleurs circulaires 10 et un seul plateau rotatif distributeur 4, comme il est représenté sur la figure 9.

Le corps fixe 2 comporte un orifice d'entrée (Hautre pression) 18, un orifice de sortie (Basse pression) 18' et un orifice d'utilisation 24. La plaque à gicleurs 10 est percée de groupes de gicleurs $12_1$, $12_2$, $12_3$ et $12'_1$, $12'_2$, $12'_3$ communiquant respectivement avec les orifices 18 et 18'.

Les zones d'obturation 6 et les évidements 20 prévus dans le plateau rotatif 4 sont tels que les gicleurs d'un groupe sont découverts successivement tandis que les gicleurs de l'autre groupe sont obturés, et vice versa.

Dans le mode de réalisation de la figure 9, où les deux groupes de gicleurs sont percés sur un même diamètre de la plaque 10, on ne peut utiliser qu'un débattement angulaire de 180° (au lieu de 360°) du plateau rotatif 4, ce qui peut conduire à une finesse de résolution insuffisante.

De préférence, comme il est représenté sur la figure 10, on dispose les deux groupes de gicleurs sur deux rayons décalés environ à 120° de la plaque à gicleurs 10 et on positionne les zones d'obturation ainsi que les évidements du plateau distributeur rotatif 4 de façon que les zones d'obturation obturent tantôt les orifices Hautre pression ($12_1$, $12_2$, $12_3$), tantôt les orifices Basse pression ($12'_1$, $12'_2$, $12'_3$), toujours avec la croissance a, 2a, 3a... de la section de passage de fluide à chaque avance d'un pas. On peut ainsi utiliser un débattement angulaire de 240° du plateau rotatif, ce qui améliore la résolution possible.

Pour simplifier les dessins, on a seulement représenté, sur les figures 7 à 10, un gicleur unique sur chaque piste circulaire, mais il est bien entendu qu'on peut prévoir plusieurs gicleurs de même section sur chaque piste, comme il a été exposé à propos de la figure 5.

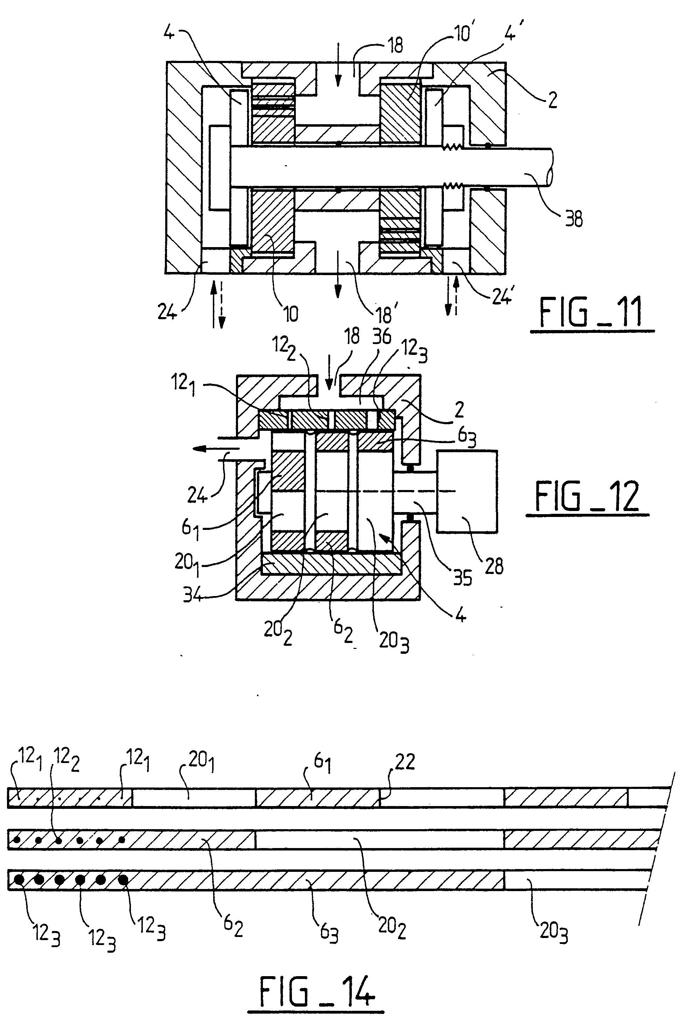

L'invention permet également de réaliser un distributeur dit 5/2, en accouplant mécaniquement deux distributeurs tels que celui de la figure 10, comme il est représenté sur la figure 11.

Le corps 2 du distributeur comporte un orifice d'entrée (Haute pression) 18, un orifice de sortie (Basse pression) 18', un premier orifice d'utilisation 24 et un deuxième orifice d'utilisation 24'. Un tel distributeur est adapté à la commande proportionnelle d'un vérin double effet raccordé aux orifices 24, 24'.

Le distributeur comprend, solidaire du corps 2, deux plaques à gicleurs 10, 10' (du type représenté sur la figure 9) et deux plateaux rotatifs distributeurs 4, 4' calés sur un arbre d'entraînement commun 38 en prise avec le moteur pas-à-pas (non représenté). Le fonctionnement ressort suffisamment de ce qui a été dit à propos des figures précédentes pour qu'il suffise de préciser que la disposition accouplée sur un même arbre 38 de deux plateaux distributeurs 4 et 4' assure un équilibrage au moins partiel des efforts hydrostatiques résultants sur les plateaux, efforts qui sont proportionnels aux différences de pression sur les deux faces du plateau et à la surface des gicleurs obturés.

5

C'est ainsi que si l'on reprend l'exemple de la figure 9 (avec un seul plateau), en supposant pour simplifier : que tous les gicleurs sont obturés par les zones d'obturation 6, que la Haute pression a une valeur p, que la pression régnant dans le circuit d'utilisation 24 a une valeur $p_1$, et que l'aire totale des orifices est A, le plateau 4 sera soumis à un premier effort hydrostatique $F_1$ proportionnel à A × $(p-p_1)$ et à un deuxième effort $F_2$, de sens contraire, proportionnel à A × $p_1$. Il y a donc un équilibrage, au moins partiel, en effort (équilibrage qui peut être total si $p_1 = 1/2p$), mais les deux efforts $F_1$, $F_2$ créent un couple. L'équilibrage en moment n'est donc pas réalisé.

Mais, si on se reporte à la figure 11, on voit que, grâce à l'accouplement mécanique en position symétrique des deux plateaux 4, 4', l'équilibrage au moins partiel en moment est également réalisé sur l'ensemble des deux plateaux reliés rigidement, puisque les moments sont de signes contraires.

Bien entendu, sur la figure 11, les deux plateaux 4, 4' pourraient être disposés entre les plaques porte-gicleurs 10, 10'.

De même, on pourrait, sur la figure 11, inverser les orifices HP-BP (18, 18') avec les orifices d'utilisation 24, 24'. Mais dans ce cas, comme il est facile de le voir, il y aurait, sur chaque plateau, un équilibrage partiel (ou total) en moment, mais pas d'équilibrage en effort (en effet les deux efforts $F_1$, $F_2$ précités sont de même sens sur un même plateau).

Un distributeur avec deux plateaux rotatifs de distribution et deux plaques à gicleurs, dont les gicleurs de section a, 2a, 4a sont répartis sur trois pistes (comme sur la figure 11), mais comportant quatre gicleurs de section identique sur chaque piste, permet un réglage à 28 positions en progression arithmétique. Si on veut obtenir une section totale de passage de fluide d'environ 4,4 mm², le diamètre respectif des gicleurs sera 0,45, 0,63, 0,89 mm, ces gicleurs étant percés, dans la plaque 10, suivant des pistes de diamètre 22, 30, 38 mm, c'est-à-dire que les plateaux circulaires rotatifs et les plaques circulaires à gicleurs peuvent avoir un diamètre extérieur d'environ 45 à 50 mm, ce qui permet de réaliser un distributeur de faible encombrement, dont la partie rotative a une faible inertie. Un tel distributeur peut convenir pour un débit total d'environ 30 litres/minute.

Dans une forme avantageuse de réalisation de l'invention, représentée sur la figure 12, l'organe distributeur mobile 4 est un organe rotatif, mais de forme cylindrique, qui est entraîné pas-à-pas en rotation, par un moteur 28, à l'intérieur d'une chemise tubulaire 34 solidaire du corps 2. Les gicleurs $12_1$, $12_2$, $12_3$ (de section a, 2a, 4a) sont percés dans la chemise 34 et communiquent avec une gorge 36 raccordée à l'orifice 18 d'arrivée (ou de départ) du fluide.

Les évidements $20_1$, $20_2$, $20_3$ sont usinés, suivant trois pistes alignées avec les trois gicleurs, sur la surface cylindrique du distributeur rotatif 4, les portions restantes de cette surface constituant les zones d'obturation $6_1$, $6_2$, $6_3$.

L'extension et la position de ces évidements et zones d'obturation correspond aux schémas des figures 3 et 4 qui peuvent être considérés comme des figures développées des surfaces cylindriques en regard de l'organe distributeur 4 et de la chemise 34. De préférence, au lieu de percer les trois (ou plus de trois) gicleurs sur une même génératrice de la chemise 34, ces gicleurs sont décalés angulairement (par exemple de 120° ou 90°), comme il a été exposé à propos de la figure 6 pour réaliser un équilibrage hydrostatique au moins partiel du cylindre dans la chemise.

Pour assurer un jeu constant entre le cylindre et la chemise et pour limiter les efforts de frottement, l'arbre 35 portant le cylindre 4 peut être porté, dans le corps 2, par deux roulements à billes (non représentés).

On a représenté sur la figure 13 un distributeur à tiroir cylindrique rotatif, c'est-à-dire du genre de celui de la figure 12, mais constituant un distributeur « 5/2 » par accouplement mécanique de deux portions identiques de tiroir rotatif.

Le corps fixe 2 du distributeur est formé par un corps principal tubulaire 40 fermé par deux fonds 42, 42'. Le corps est percé de cinq orifices de passage de fluide : 18 (entrée HP), 18' et 18'' (sortie BP), 24 et 24' (utilisation). Pour rendre le dessin plus clair, on a représenté les cinq orifices dans un même plan diamétral, mais, en réalité ils sont disposés dans des plans différents.

Dans le corps fixe est montée, de façon étanche et fixe, la chemise à gicleurs 34 qui comporte quatre joints d'étanchéité 44 délimitant trois chambres annulaires 46, 48, 50 indépendantes étanches. La chambre 46 communique avec l'entrée HP 18 et les chambres 48, 50 communiquent respectivement avec les orifices d'utilisation 24, 24'. Deux chambres annulaires d'extrémité 52, 52' communiquent respectivement avec les sorties BP 18', 18''.

La chemise 34 est percée de quatre groupes de chacun une pluralité de gicleurs (par exemple trois) $12_1$, $12_2$, $12_3$, $12'_1$, $12'_2$, $12'_3$, $13_1$, $13_2$, $13_3$, $13'_1$, $13'_2$, $13'_3$ de sections croissantes a, 2a, 4a. Là encore, on a représenté les gicleurs dans un même plan diamétral, pour la clarté du dessin, mais il sonst décalés angulairement pour établir l'équilibrage hydrostatique du tiroir rotatif 4, comme on le verra à propos de la figure 17.

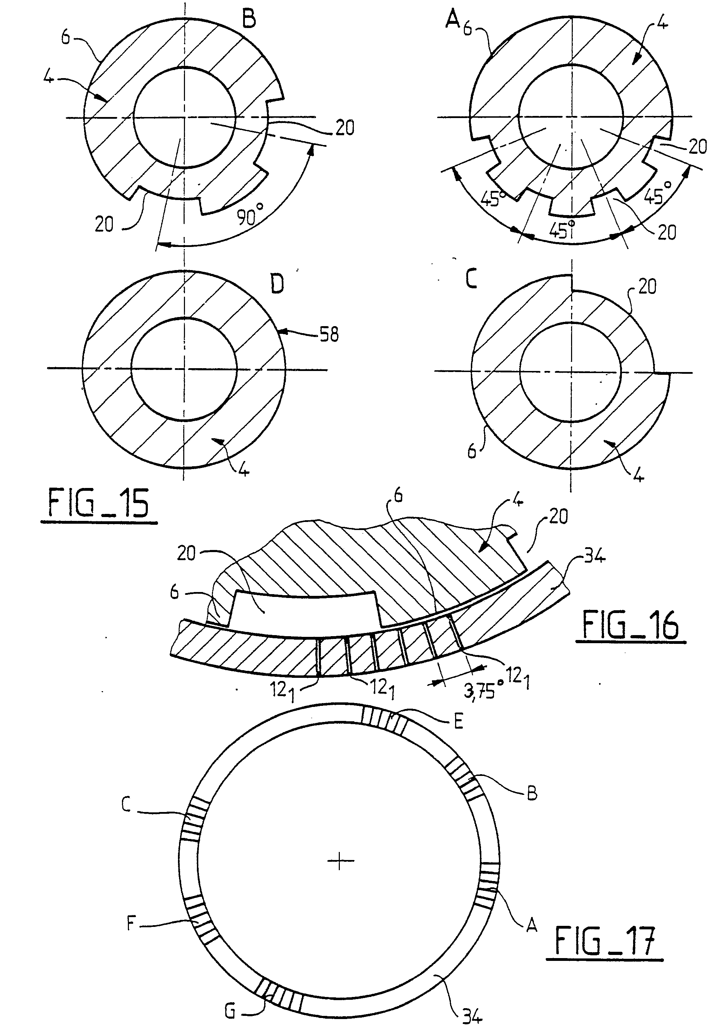

Sur chaque piste de la chemise 34 est percée une pluralité de gicleurs de section identique (comme on l'avait représenté sur la figure 5 avec quatre gicleurs identiques sur chaque piste), décalés d'un incrément. Dans le mode de réalisation de la figure 13, on peut prévoir six gicleurs identiques, comme on l'a représenté sur la figure 14 qui est une vue développée partielle de la chemise 34 ainsi que des zones d'obturation et des évidements du tiroir 4, au droit des gicleurs $12_1$, $12_2$, $12_3$. La disposition à trois pistes et six gicleurs par piste donne 42 positions, avec les sections de passage : a, 2a, 3a, ... 40a, 41a, 42a.

Le tiroir cylindrique rotatif 4 est de forme tubulaire, pour en diminuer l'inertie. Il est entraîné pas-à-pas en rotation par un moteur pas-à-pas 28, l'arbre 38 entraînant le tiroir par une broche 54. Des roulements à billes (non représentés) peuvent être prévus aux extrémités du tiroir pour centrer ce dernier dans la chemise 34.

La surface extérieure cylindrique du tiroir 4 est subdivisée en quatre groupes de trois pistes identiques dont on décrira seulement les pistes $14_1$, $14_2$, $14_3$ qui coopèrent avec les gicleurs $12_1$, $12_2$, $12_3$. Chaque piste est séparée de sa voisine par une gorge 56. Entre les deux groupes de trois pistes de la moitié droite et de la moitié gauche du tiroir, deux cordons cylindriques ininterrompus 58, 58', sans évidements, glissent de façon étanche contre la surface intérieure de la chemise 34 pour éviter toute communication entre deux groupes voisins ($12_1$, $12_2$, $12_3$ et $13'_1$, $13'_2$, $13'_3$ d'une part, $12'_1$, $12'_2$, $12'_3$ et $13_1$, $13_2$, $13_3$ d'autre part).

On a représenté sur la figure 15 les vues en coupe du tiroir 4 suivant les plans A, B, C, D de la figure 13 pour montrer les zones d'obturation 6 des gicleurs et les évidements 20 sur les trois pistes $14_1$, $14_2$, $14_3$ ainsi que la zone d'étanchéité continue 58 (plan D).

Pour les trois autres groupes des pistes du tiroir 4, le dessin des zones d'obturation et des évidements est identique, mais avec le décalage angulaire voulu pour assurer les commutations hydrauliques nécessaires entre les orifices HP, BP et d'utilisation.

La chemise 34 est percée d'une série de passages de fluide entre sa surface extérieure et son volume intérieur : des passages HP 60 mettent en communication la gorge 46 de la chemise avec une gorge 62 taillée dans la partie centrale du tiroir 4 ; des passages BP 64, 64' mettent en communication des chambres annulaires d'extrémité 66, 66' entourant le tiroir 4 avec les chambres BP 52, 52' et les orifices de sortie 18', 18".

Pour actionner le tiroir rotatif d'un distributeur tel que celui de la figure 13 (à 42 positions) dans chaque sens d'utilisation, c'est-à-dire environ sur une demi-rotation, on peut utiliser un moteur pas-à-pas 28 donnant 96 pas par tour, soit un incrément angulaire de 3,75°.

Sur la figure 16, on a représenté une vue partielle de la chemise 34, suivant le plan A de la figure 13, montrant les six gicleurs $12_1$ de section identique a, décalés d'un pas de 3,75° sur une même piste et montrant une portion du tiroir 4 avec les zones d'obturation 6 et les évidements 20 dont il est creusé.

Comme on l'a vu précédemment, l'équilibrage hydrostatique du tiroir 4 dans la chambre 34 est réalisé, totalement ou partiellement, par un décalage angulaire approprié des gicleurs en regard de la chemise, en tenant compte du fait que les efforts hydrostatiques appliqués au tiroir de distribution sont proportionnels à la différence de pression et à la surface des orifices obturés.

On a représenté à titre d'exemple sur la figure 17 l'emplacement, sur la chemise 34, de chaque groupe de six gicleurs de même section suivant les plans A, B, C, E, F, G, de la figure 3, étant rappelé que les gicleurs de section a, 2a, 4a sont disposés respectivement sur les pistes passant par les plans A, G - B, F - C, E. Le décalage angulaire des groupes de gicleurs assure l'équilibrage du tiroir dans la chemise.

Afin de limiter l'inertie du tiroir, on lui donne un diamètre le plus petit possible. Dans ce cas, il peut être avantageux de remplacer chaque orifice à grand débit de section 4a (tel que $12_3$ sur la figure 13) par deux orifices côte à côte de section 2a, situés sur une même génératrice de la chemise, afin de ne pas dépasser l'incrément angulaire choisi pour obtenir la résolution envisagée.

Il ressort bien de ce qui précède que le distributeur suivant l'invention permet une variation rigoureusement proportionnelle du débit (ou de la pression) en fonction du signal reçu, grâce au fait que les variations de section de passage de fluide sont faites par l'ouverture (ou la fermeture) successive d'une pluralité de distributeurs équivalents à des distributeurs tout ou rien.

L'invention trouve une application particulièrement intéressante dans le cas d'une commande numérique contrôlant les déplacements angulaires du moteur pas-à-pas d'entraînement. Le distributeur ne nécessite pas d'étage pilote, le tiroir pouvant être commandé directement par l'actionneur pas-à-pas, ce qui permet une fabrication fiable et peut coûteuse.

## Revendications

1. Distributeur hydraulique proportionnel comprenant un premier et un deuxième organes, dont l'un (2) est un corps fixe et dont l'autre (4) est un organe distributeur mobile ayant une surface (6) en contact avec une surface correspondante (8) du corps fixe, le premier organe (2) comportant au moins un passage (12, 18) de fluide hydraulique débouchant sur sa surface, ledit passage comprenant une pluralité n d'orifices élémentaires, ou gicleurs (12), percés dans le premier organe, espacés les uns des autres et dont la section totale forme la section dudit passage ; le deuxième organe comportant sur sa surface au moins une zone d'obturation (6) desdits gicleurs et au moins un évidement (20) formant une zone de dégagement desdits gicleurs, ledit organe mobile étant commandé par un système actionneur pas-à-pas (28, 30) entraînant l'organe mobile par incréments de valeur d, les évidements (20) ainsi que les zones d'obturation (6) prévus sur le deuxième organe étant tels que lesdits gicleurs sont découverts ou obturés tour à tour à chaque avance d'un incrément d de l'organe mobile (4), ledit distributeur étant caractérisé en ce que :

— les gicleurs ($12_1$, $12_2$, $12_3$, $12_4$) sont disposés sur une pluralité de pistes parallèles ($14_1$, $14_2$, $14_3$,

**0 169 134**

$14_4$) orientées parallèlement au déplacement relatif des deux organes (2, 4) ;
— une pluralité m de gicleurs de section identique est percée sur chacune desdites pistes à intervalle d ;
— la section des gicleurs est croissante dans le rapport a, 2a, 4a, 8a ... d'une piste à l'autre ;
— et l'extension des évidements ($20_1$, $20_2$, ...) ainsi que l'extension des zones d'oburation ($6_1$, $6_2$, ...) sur les pistes correspondantes du deuxième organe (4) sont égales à m × d, 2m × d, 4m × d, 8m × d...

2. Distributeur suivant la revendication 1, caractérisé en ce que les gicleurs (12) sont percés dans une partie (10) solidaire du corps fixe (2) et en ce que le deuxième organe portant les zones d'obturation et les évidements précités est l'organe mobile (4) entraîné pas-à-pas par l'actionneur (28).

3. Distributeur suivant l'une des revendications précédentes, caractérisé en ce que l'organe mobile se déplace suivant un mouvement linéaire.

4. Distributeur suivant l'une des revendications 1 ou 2, caractérisé en ce que l'organe mobile se déplace suivant un mouvement de rotation.

5. Distributeur suivant l'une quelconque des revendications précédentes, caractérisé en ce que les surfaces coopérantes en regard de l'organe fixe et de l'organe mobile sont des surfaces planes.

6. Distributeur suivant l'une des revendications 1 à 4, caractérisé en ce que les surfaces coopérantes en regard de l'organe fixe et de l'organe mobile sont des surfaces cylindriques.

7. Distributeur suivant la revendication 6, caractérisé en ce que l'organe distributeur mobile est un tiroir (4, 32) de forme cylindrique, sa surface cylindrique présentant les zones d'obturation et les évidements précités ; en ce que les gicleurs (12) sont percés dans une chemise tubulaire (34), solidaire du corps fixe (2) et à l'intérieur de laquelle se déplace ledit tiroir ; et en ce que les gicleurs sont disposés sur une pluralité de rayons ($R_1$, $R_2$, $R_3$ ...), décalés équiangulairement, lesdits gicleurs décalés établissant un équilibrage hydrostatique au moins partiel du tiroir dans la chemise.

8. Distributeur suivant la revendication 7, caractérisé en ce que le tiroir cylindrique (32) est un tiroir coulissant linéairement pas-à-pas dans la chemise (34).

9. Distributeur suivant la revendication 7, caractérisé en ce que le tiroir cylindrique (4) est un tiroir rotatif, pivotant pas-à-pas dans la chemise (34).

10. Distributeur suivant l'une des revendications 4 à 7 ou 9, caractérisé en ce qu'il comprend au moins deux organes distributeurs mobiles rotatifs (4, 4') calés sur un même arbre (38) entraîné par un actionneur rotatif pas-à-pas (28), chacun desdits organes (4, 4') coopérant avec un groupe de gicleurs ($12_1$, $12_2$, $12_3$, $12'_1$, $12'_2$, $12'_3$) percés dans au moins une partie (4, 4', 34) solidaire du corps fixe (2), chaque groupe de gicleurs communiquant respectivement avec un passage de fluide distinct (18, 18'), et chaque organe distributeur mobile (4, 4') contrôlant la circulation du fluide vers ou en provenance d'un passage de fluide distinct (24, 24').

**Claims**

1. Proportional hydraulic distributor valve comprising a first and a second mechanism, of which one (2) is a fixed body and the other (4) is a mobile distributor mechanism which has one surface (6) in contact with a corresponding surface (8) of the fixed body, the first mechanism (2) comprising at least one opening (12, 18) for hydraulic fluid emerging onto its surface, the said opening comprising a multiplicity n of elementary orifices, or jets (12), drilled in the first mechanism, spaced apart from each other and the whole cross section of which forms the cross section of the said opening ; the second mechanism having on its surface at least one zone (6) for stopping up the said jets and at least one recess (20) forming a zone for releasing the said jets, the said mobile mechanism being controlled by a stepping operating system (28, 30) driving the mobile mechanism along by increments of value d, the recesses (20) as well as the stopping up zones (6) provided on the second mechanism being such that the said jets are uncovered or stopped up in turn at each advance of increment d of the mobile mechanism (4), the said distributor valve being characterised such that :
— the jets ($12_1$, $12_2$, $12_3$, $12_4$) are arranged on a multiplicity of parallel tracks ($14_1$, $14_2$, $14_3$, $14_4$) oriented in a parallel direction to the relative displacement of the two mechanisms (2, 4) ;
— a multiplicity m of identical cross section jets is drilled on each of the said tracks at interval d ;
— the cross section of the jets increases at the ratio a, 2a, 4a, 8a ... from one track to the next ;
— and the enlargement of the recesses ($20_1$, $20_2$, ...) as well as the enlargement of the stopping up zones ($6_1$, $6_2$, ...) on the corresponding tracks of the second mechanism (4) are equal to m × d, 2m × d, 4m × d, 8m × d...

2. Distributor valve as claimed in Claim 1 wherein the jets (12) are drilled in an integral part of the fixed body (2) and wherein the second mechanism carrying the stopping up zones and the aforementioned recesses is the mobile mechanism (4) driven in steps by the operating gear (28).

3. Distributor valve as claimed in one of the preceding Claims wherein the mobile mechanism moves with a linear motion.

4. Distributor valve as claimed in either Claim 1 or Claim 2 wherein the mobile mechanism moves with a rotating motion.

5. Distributor valve as claimed in any one of the preceding Claims wherein the facing surfaces

8

working together of the fixed mechanism and of the mobile mechanism are flat surfaces.

6. Distributor valve as claimed in one of Claims 1 to 4 wherein the facing surfaces working together of the fixed mechanism and of the mobile mechanism are cylindrical surfaces.

7. Distributor valve as claimed in Claim 6 wherein the mobile distributing mechanism is a slide-valve (4, 32), cylindrical in shape, its cylindrical surface presenting the aforementioned stopping up zones and recesses ; wherein the jets (12) are drilled in a tubular casing (34), integral with the fixed body (2) and inside which the said slide-valve moves ; and in which the jets are arranged on a multiplicity of radii ($R_1$, $R_2$, $R_3$ ...), staggered equiangularly, the said staggered jets establishing at least a partial hydrostatic balance of the slide-valve in the casing.

8. Distributor valve as claimed in Claim 7 wherein the cylindrical slide-valve (32) is a valve which slides in a linear stepping motion in the casing.

9. Distributor valve as claimed in Claim 7 wherein the cylindrical slide-valve (4) is a rotating valve, which swivels step by step in the casing.

10. Distributor valve as claimed in one of Claims 4 to 7 or 9 wherein it comprises at least two mobile rotating distributing mechanisms (4, 4') fixed on the same shaft (38) driven by a rotating stepping operating gear (28), each of the said mechanisms (4, 4') working together with a group of jets ($12_1$, $12_2$, $12_3$, $12'_1$, $12'_2$, $12'_3$) drilled in at least one integral part (4, 4', 34) of the fixed body (2), each group of jets communicating respectively with a separate fluid opening (18, 18'), and each mobile distributing mechanism (4, 4') controlling the circulation of the fluid towards or coming from a separate fluid opening (24, 24').


**Patentansprüche**

1. Hydraulischer Proportionalverteiler, umfassend ein erstes und ein zweites Organ, von denen das eine (2) ein fester Körper und das andere (4) ein bewegliches Verteilerorgan mit einer Oberfläche (6) ist, die mit einer entsprechenden Oberfläche (8) des festen Körpers in Kontakt steht, wobei das erste Organ (2) mindestens eine Passage (12, 18) für Hydraulikfluid aufweist, die auf der Oberfläche mündet, wobei die Passage eine Vielzahl n von elementaren Öffnungen oder Spritzdüsen (12) aufweist, welche das erste Organ durchdringen, voneinander beabstandet sind und deren Gesamtquerschnitt den Querschnitt der Passage bildet ; wobei das zweite Organ auf seiner Oberfläche mindestens eine Schließzone (6) für die Spritzdüsen und mindestens eine Aussparung (20) aufweist, die eine Zone des Abstands für die Spritzdüsen bildet, wobei das bewegliche Organ von einem schrittweisen Betätigungssystem (28, 30) gesteuert ist, welches das bewegliche Organ in Inkrementen des Wertes d mitnimmt, wobei die Aussparungen (20) sowie die Schließzonen (6), die an dem zweiten Organ vorgesehen sind, so ausgebildet sind, daß die Spritzdüsen wechselweise bei jedem Vorschub um ein Inkrement d des beweglichen Organs (4) verschlossen oder geöffnet werden, wobei der Verteiler dadurch gekennzeichnet ist, daß

— die Spritzdüsen ($12_1$, $12_2$, $12_3$, $12_4$) in einer Vielzahl von parallelen Bahnen ($14_1$, $14_2$, $14_3$, $14_4$) angeordnet sind, die parallel zur Relativverschiebung der beiden Organe (2, 4) orientiert sind ;

— eine Vielzahl m von Spritzdüsen mit identischem Querschnitt in den jeweiligen Bahnen im Intervall d durchgebohrt ist ;

— der Querschnitt der Spritzdüsen im Verhältnis a, 2a, 4a, 8a, ... von einer Bahn zur nächsten zunimmt ;

— und die Ausdehnung der Aussparungen ($20_1$, $20_2$, ...) sowie die Ausdehnung der Schließzonen ($6_1$, $6_2$, ...) in den entsprechenden Bahnen des zweiten Organs (4) gleich den Werten m × d, 2m × d, 4m × d, 8m × d ... sind.

2. Verteiler nach Anspruch 1, dadurch gekennzeichnet, daß die Spritzdüsen (12) in ein mit dem festen Körper (2) verbundenes Teil (10) gebohrt sind und daß das zweite Organ, welches die Schließzonen und die Aussparungen trägt, das bewegliche Organ (4) ist, welches schrittweise von der Betätigungseinrichtung (28) mitgenommen wird.

3. Verteiler nach einem der vorhergehenden Ansprüche, dadurch gekennzeichnet, daß das bewegliche Organ sich gemäß einer linearen Bewegung verschiebt.

4. Verteiler nach einem der Ansprüche 1 oder 2, dadurch gekennzeichnet, daß das bewegliche Organ sich gemäß einer Drehbewegung verschiebt.

5. Verteiler nach einem der vorhergehenden Ansprüche, dadurch gekennzeichnet, daß die einander gegenüberliegenden, miteinander zusammwirkenden Oberflächen des festen Organes und des beweglichen Organes plane Flächen sind.

6. Verteiler nach einem der Ansprüche 1 bis 4, dadurch gekennzeichnet, daß die einander gegenüberliegenden, miteinander zusammenwirkenden Oberflächen des festen Organes und des beweglichen Organes zylindrische Flächen sind.

7. Verteiler nach Anspruch 6, dadurch gekennzeichnet, daß das bewegliche Verteilerorgan ein Schieber (4, 32) zylindrischer Form ist, dessen zylindrische Oberfläche die Schließzonen und die Aussparungen aufweist ; daß die Spritzdüsen (12) in einen rohrförmigen Mantel (34) gebohrt sind, der mit dem festen Körper (2) verbunden ist und in dessen Innerem sich der Schieber verschiebt ; und daß die Spritzdüsen auf einer Vielzahl von Radien ($R_1$, $R_2$, $R_3$, ...) angeordnet sind, die in gleichen Winkelabständen versetzt sind, wobei die versetzten Spritzdüsen zumindest teilweise ein hydrostatisches Gleichgewicht des Schiebers im Mantel bilden.

8. Verteiler nach Anspruch 7, dadurch gekennzeichnet, daß der zylindrische Schieber (32) ein Schieber ist, der in dem Mantel (34) schrittweise linear gleitet.

9. Verteiler nach Anspruch 7, dadurch gekennzeichnet, daß der zylindrische Schieber (4) ein Drehschieber ist, der sich in dem Mantel (34) schrittweise dreht.

10. Verteiler nach einem der Ansprüche 4 bis 7 oder 9, dadurch gekennzeichnet, daß er mindestens zwei bewegliche drehbare Verteilerorgane (4, 4') aufweist, die auf derselben Achse (38) verkeilt sind, die von einer schrittweise drehbaren Betätigungseinrichtung (28) angetrieben ist, wobei jedes der Organe (4, 4') mit einer Gruppe von Spritzdüsen ($12_1$, $12_2$, $12_3$, $12'_1$, $12'_2$, $12'_3$) zusammenwirkt, die zumindest ein mit dem festen Körper (2) verbundenes Teil (4, 4' 34) durchdringen, wobei jede Gruppe von Spritzdüsen jeweils mit einer bestimmten Fluidpassage (18, 18') kommuniziert, und wobei jedes bewegliche Verteilerorgan (4, 4') die Zirkulation des Fluids gegenüber, einer oder austretend aus einer bestimmten Fluidpassage (24, 24') steuert.

FIG_1

FIG_2

**0 169 134**

FIG_3

FIG_4

FIG_5

2

FIG_6

FIG_7

FIG_8

FIG_9

FIG_10

3

**0 169 134**

FIG_11

FIG_12

FIG_14

4

FIG _13

0 169 134

FIG_15

FIG_16

FIG_17